# EUROPÄISCHE PATENTSCHRIFT

(11) **EP 2 298 475 B1**
(45) Veröffentlichungstag und Bekanntmachung des Hinweises auf die Patenterteilung: **24.10.2012**
(21) Anmeldenummer: 10178262.1
(22) Anmeldetag: 22.09.2010
(51) Int. Cl.: B23B 31/10, B23B 31/16

(54) **Spannfutter zum Spannen und Zentrieren ringförmig ausgebildeter und verformungsempfindlicher Werkstücke**
Collet chuck for clamping and centering ring-shaped workpieces
Mandrin pour le serrage et le centrage de pièces usinées formées de manière annulaire et sensibles à la déformation

(30) Priorität: 22.09.2009 DE 102009047996; 22.09.2009 DE 202009013226 U
(43) Veröffentlichungstag der Anmeldung: 23.03.2011
(73) Patentinhaber: SAV Spann-Automations-Normteiletechnik GmbH, 90469 Nürnberg (DE)
(72) Erfinder: Leibold, Harald, 92318, Neumarkt (DE); Leikauf, Johannes, 91217, Hersbruck (DE)
(74) Vertreter: Kailuweit & Uhlemann Patentanwälte

(56) Entgegenhaltungen:
- EP-A2- 0 999 004
- US-A- 2 757 009
- US-A1- 2009 096 177

## Beschreibung

Die Erfindung betrifft Spannfutter zum Spannen und Zentrieren ringförmig ausgebildeter und verformungsempfindlicher Werkstücke mit einem Grundkörper und mehreren geführt radial verfahrbaren und jeweils an einen Linearantrieb gekoppelten Spannbacken.

Aus dem Stand der Technik ist bekannt, dass Spannfutter, welche kraftbetätigt sind, über verschiedene Mechaniken wie z. B. Keilhaken-Spannfutter, Hebelfutter etc. durch eine axiale Bewegung (Zylinder oder andere Art von linearer Krafteinleitung) im Zentrum des Spannfutters die axiale Kraft in eine zentrisch wirkende radiale Kraftkomponente umlenken und das Werkstück von innen oder außen zwangsweise zentrieren und spannen; mit drei Backen ist eine Bestimmung des Werkstückes gegeben.

Da z. B. Kugellagerringe durch vorhergehende Arbeitsgänge (wie z. B. Vordrehen, Härten) unrund sein können, ist dieser zwangsweise Zentrier-Effekt vom großen Nachteil.

Bei Drei-Backen-Spannfuttern wird die Spannkraft an drei Stellen in das Werkstück eingeleitet welche, eine Verformung (Polygonform) zu Folge hat. Bei z. B. sechs Spannbacken (Hexagonform) oder acht Backen (Oktogonform).

Durch Anordnung von sechs oder mehr Spannbacken, welche zwangsweise zentrisch wirken, ist eine Überbestimmung der verformten Werkstücke gegeben, selbst Sechs-Backen-Hebelausgleichs-Spannfutter oder Drei-Backen-Spannfutter mit Pendelbacken verformen das Werkstück in eine Polygonform.

In der herkömmlichen Art werden diese Werkstücke beim Spannen verformt und eine konzentrische Bearbeitung auf Dreh- und/oder Schleifmaschinen durchgeführt, nach der Bearbeitung und nach dem Entspannen formen sich die Werkstücke zurück und die Konzentrizität ist nicht mehr gegeben.

Die EP 0 999 004 B1 versucht diesem Problem zu begegnen, indem sie eine Spannvorrichtung vorschlägt, bei der die Spannbacken einzeln und unabhängig betätigt werden sollen und bei der die Spannbacken über Spannkraft- und/oder Stellwegesensoren verfügen. Die Spannbacken sind dafür ausgelegt, entweder von außen oder von innen zu spannen. Ein Einsatz von Linearantrieben zur Bewegung der Spannbacken ist nicht vorgesehen. Vielmehr erfolgt die Bewegung der Spannbacken in zwei Schritten. Im ersten Schritt wird die Spannfutterbasis an das Werkstück herangefahren. Die Spannbacke befindet sich auf einer Kippplatte, die auf der Spannfutterbasis angeordnet ist und im zweiten Schritt piezoelektrisch in Halteposition bewegt wird.

Herkömmliche kraftbetätigte Spannfutter erlauben entweder das Innenspannen oder das Außenspannen. Um z. B. von Innenspannen und Außen-Bearbeiten auf Außenspannen und Innen-Bearbeiten umzustellen, ist ein Umrüstvorgang notwendig mit allen Unzulänglichkeiten wie Umbau der Spannbacken, erneutes Zentrieren und Spannen des Werkstückes.

Herkömmliche kraftbetätigte Spannfutter haben in der Regel durch die Kraftumlenkung und Kraftübersetzung nur einen geringen Spannweg (Spannhub).

Weiterhin benötigen herkömmliche Kraft-Spannfutter mit einem Hydraulik- oder Pneumatikzylinder zum axialen Einleiten der Betätigungskraft ein Medium (Hydraulik oder Druckluft), welches über aufwendige Drehdurchführungen zugeführt wird.

Die Mängel und Nachteile zu beseitigen, ist Zweck der Erfindung.

Um verformungsempfindliche Werkstücke möglichst verformungsfrei Spannen und Zentrieren zu können und eine Bearbeitung an drei Seiten durchführen zu können, zeichnet sich diese Erfindung aus.

Der im Patentanspruch 1 angegebenen Erfindung liegt die Aufgabe zugrunde, verformungsempfindliche Werkstücke einfach zu spannen und zu zentrieren.

Diese Aufgabe wird mit den im Patentanspruch 1 aufgeführten Merkmalen gelöst.

Die Spannfutter zum Spannen und Zentrieren ringförmig ausgebildeter und verformungsempfindlicher Werkstücke mit einem Grundkörper und mehreren geführt radial verfahrbaren und jeweils an einen Linearantrieb gekoppelten Spannbacken zeichnen sich insbesondere dadurch aus, dass das Werkstück weitestgehend ohne Verformung bearbeitbar ist.

Dazu sind Spannbacken zum Außen- und Innenspannen des Werkstücks angeordnet und mit Linearantrieben gekoppelt, so dass das Werkstück außen oder innen oder sowohl außen als auch innen spann- oder zentrierbar ist. Weiterhin sind Wegmesssysteme für die Positionsbestimmung der Spannbacken und Kraftsensoren wenigstens für die Spannkräfte Bestandteile der Linearantriebe der Spannbacken. Darüber hinaus sind die Linearantriebe, die Wegmesssysteme und die Kraftsensoren mit einer Steuereinrichtung verbunden, wobei die Steuereinrichtung ein Bestandteil des Spannfutters ist.

Mittels der einzelnen Linearantriebe und der Wegmesssysteme können die Spannbacken des Spannfutters sowohl synchron als auch unabhängig voneinander dem Werkstück zugestellt werden. Das kann auch vorteilhafterweise aus einer vorbestimmbaren Ausgangslage erfolgen, so dass bei einer synchronen Bewegung aus der Ausgangslage das Werkstück leicht zentrierbar ist. Gleichzeitig ist über die Kraftsensoren die dabei auf das Werkstück wirkende Kraft bestimmbar. Die auftretende Kraft kann auch vorbestimmt werden, so dass bei dem Zentrieren und dem Spannen eine Verformung des Werkstücks weitestgehend vermieden wird.

Ein weiterer Vorteil besteht darin, dass das Werkstück sowohl von außen als auch von innen spann- und zentrierbar ist. Damit wird gewährleistet, dass alle bis auf die in Richtung des Spannfutters weisenden Konturen bearbeitet werden können, ohne das Werkstück umzuspannen. Es bleibt in seiner Lage auf dem Spannfutter fixiert.

Damit eignet sich das Spannfutter insbesondere zum Einspannen, Stützen und Zentrieren von verformungsempfindlichen Werkstücken, wie das zum Beispiel dünnwandige Kugellagerringe sind.

Vorteilhafte Ausgestaltungen der Erfindung sind in den Patentansprüchen 2 bis 11 angegeben.

Im Grundkörper sind nach der Weiterbildung des Patentanspruchs 2 Elektromagnete oder Elektro-Permanent-Magnete jeweils bestehend aus einem Permanent-Magnetkern oder Eisenkern mit einer Spule, Polsegmenten und Polschuhen zum Spannen des Werkstücks angeordnet.

Das Zentrieren erfolgt dabei beispielsweise über die Spannbacken und das Spannen zusätzlich mittels der Elektromagnete oder Elektro-Permanent-Magnete. Die Möglichkeit einer Verformung des Werkstücks wird dadurch weiter verringert. Mittels der Kraftsensoren ist die Kraft, ohne das Werkstück zu verformen, vorbestimmt einstellbar.

Im Grundkörper sind nach der Weiterbildung des Patentanspruchs 3 ein Elektro-Permanent-Magnetsystem oder Elektro-Magnetsystem angeordnet. Neben einer sicheren Fixierung können weiterhin die auftretenden Späne problemlos abgeführt werden.

Nach der Weiterbildung des Patentanspruchs 4 ist die Spannbacke auf einer Grundbacke befestigt und die Grundbacke an den Linearantrieb gekoppelt. Damit können leicht verschieden ausgeformte Spannbacken auf dem Spannfutter befestigt werden. Dadurch ist eine leichte Anpassung an verschiedene Werkstückgeometrien gegeben. Dieser Sachverhalt führt zu einem universell verwendbaren Spannfutter.

Die Spannbacke besitzt nach der Weiterbildung des Patentanspruchs 5 eine u-Form. Weiterhin ist der Abstand der Schenkel der u-förmigen Spannbacke größer als die Ringbreite des Werkstücks, so dass die Innenflächen der Schenkel das Werkstück innen oder außen spannen.

Das Spannfutter besitzt nach der Weiterbildung des Patentanspruchs 6 Schleifringe zur elektrischen Verbindung wenigstens der Linearantriebe und der Steuereinrichtung mit einer elektrischen Energiequelle. Die Steuereinrichtung ist vorteilhafterweise ein Datenverarbeitungssystem, in dem wenigstens die Bedingungen und das Verfahren für das Zentrieren des Werkstücks implementiert ist.

Kraftsensoren sind nach der Weiterbildung des Patentanspruchs 7 über die Steuereinrichtung mit Linearantrieben so verbunden, dass Spannbacken synchron verfahren werden und das Werkstück mit vorgegebener Kraft zentrieren und/oder spannen.

Die Kraftsensoren, die Linearantriebe und die Elektromagnete sind nach der Weiterbildung des Patentanspruchs 8 mit der Steuereinrichtung so verbunden, dass die Spannbacken synchron oder einzeln verfahren werden, das Werkstück mit vorgegebener Kraft zentrieren und/oder das Werkstück mit den Elektro-Permanent-Magneten gespannt wird.

Kraftsensoren sind nach der Weiterbildung des Patentanspruchs 9 über die Steuereinrichtung mit Linearantrieben so verbunden, dass Spannbacken zum Spannen von außen oder innen synchron verfahren werden und das Werkstück mit vorgegebener Kraft zentrieren und die Innen- oder Außenkontur und die vom Spannfutter abgewandte Kontur des Werkstücks bearbeitbar sind und dass Spannbacken zum nachfolgenden Spannen von innen oder außen synchron verfahren werden und das Werkstück mit vorgegebener Kraft zentrieren und die Außen- oder Innenkontur bearbeitbar ist.

Die Kraftsensoren sind nach der Weiterbildung des Patentanspruchs 10 über die Steuereinrichtung mit den Linearantrieben so verbunden, dass die auftretenden Fliehkräfte, welche durch die Drehzahl und die Masse der Spannbacken sowie dem Werkstück entstehen, über die Kraftsensoren ermittelt werden und durch beim Spannen und/oder Zentrieren von außen zu den vorgewählten Spann- und/oder Zentrierkräften addiert und in umgekehrter Weise beim Spannen und/oder Zentrieren von innen zu den vorgewählten Spann- und/oder Zentrierkräften subtrahiert und damit die Fliehkräfte kompensiert werden.

Die Kraftsensoren sind nach der Weiterbildung des Patentanspruchs 11 über die Steuereinrichtung mit den Linearantrieben so verbunden, dass Spannbacken einzeln oder in wenigstens einer Gruppe von Spannbacken entsprechend vorgegebener sich erhöhender Kräfte verfahren werden und das Werkstück mit vorgegebener Kraft zentrieren und/oder spannen.

Ein Ausführungsbeispiel der Erfindung ist in den Zeichnungen jeweils prinzipiell dargestellt und wird im Folgenden näher beschrieben.

Es zeigen:
Fig. 1 ein Spannfutter zum Spannen und Zentrieren ringförmig ausgebildeter und verformungsempfindlicher Werkstücke in einer Draufsicht und
Fig. 2 ein Spannfutter in einer Schnittdarstellung.

Ein Spannfutter zum Spannen und Zentrieren ringförmig ausgebildeter und verformungsempfindlicher Werkstücke 1 besteht im Wesentlichen aus einem Grundkörper 2, Grundbacken 3 mit Spannbacken 4, Linearantrieben 5, Kraftsensoren 6 und einer Steuereinrichtung.

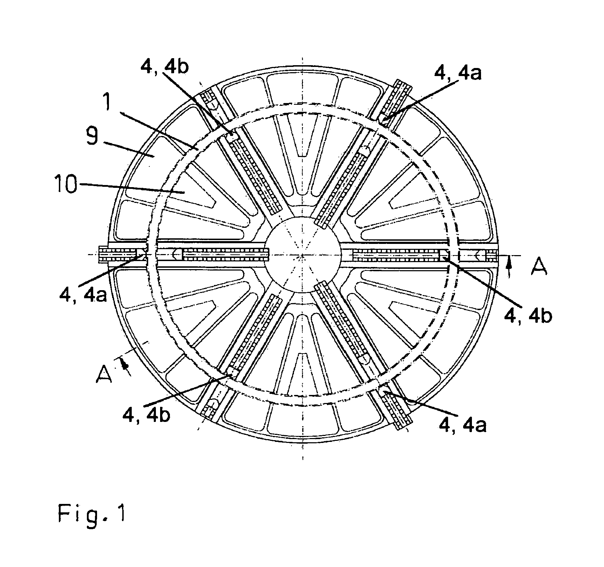

Die Fig. 1 zeigt ein Spannfutter zum Spannen und Zentrieren ringförmig ausgebildeter und verformungsempfindlicher Werkstücke in einer prinzipiellen Draufsicht.

Das Spannfutter besitzt in diesem Beispiel sechs Achsen, gebildet aus sechs Grundbacken 3, die im Grundkörper 2 geradgeführt und mit jeweils einem Linearantrieb 5 zum Verfahren verbunden sind.

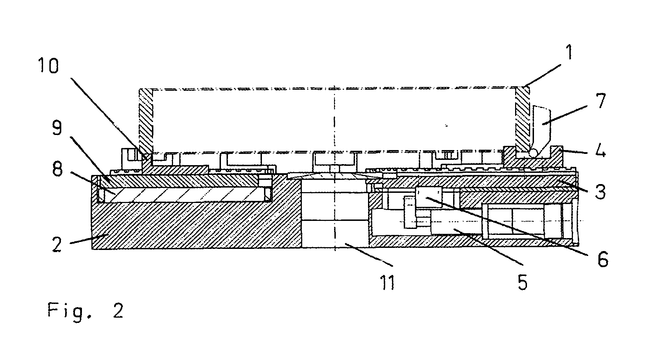

Die Fig. 2 zeigt dazu ein Spannfutter in einer prinzipiellen Schnittdarstellung.

Auf jeder der Grundbacken 3 ist eine Spannbacke 4 mittels wenigstens einer Schraubenverbindung lösbar befestigt. Die Spannbacken 4 besitzen eine u-Form, wobei der Abstand der Schenkel größer als die Breite des ringförmigen Werkstücks 1 ist. Dadurch ist das Werkstück 1 mittels der Innenflächen der Schenkel innen oder außen spannbar.

Die Linearantriebe 5 sind jeweils mit einem Wegmesssystem ausgestattet, so dass die jeweilige Position bestimmbar ist. Dazu sind die Linearantriebe 5 und die Wegmesssysteme mit der Steuereinrichtung in Form eines bekannten Datenverarbeitungssystems zusammengeschaltet. Dazu werden bekannte Linearantriebe 5 verwendet, welche über einen Elektromotor und ein Spindelgetriebe eine Drehbewegung des Motors in eine lineare Bewegung der Spindelstange wandeln. Die Spindelstange ist an die Grundbacke 3 gekoppelt. Im Linearantrieb 5 ist ein Linear-Wegmesssystem zum Ermitteln der Position der mit der Grundbacke 3 form- und kraftschlüssig verbundenen Spindelstange sowie ein Kraftsensor 6 für Zug- und Druckkräfte zum direkten ermitteln der Spann -und Fliehkräfte integriert.

In diesem Beispiel sind drei Spannbacken 4a über die Steuereinrichtung synchronisiert und wirken von außen auf das Werkstück 1. Dadurch wird ein exaktes Zentrieren ohne Überbestimmung erreicht. Die drei weiteren Spannbacken 4b sind einzelnen betätigt und Stützen oder Spannen das Werkstück in diesem Beispiel von innen. (4a und 4b siehe Fig. 1)

In dieser Konfiguration kann beispielsweise eine Bearbeitung der oberen Seite, der Innenkontur und der Außenkontur durch das Werkzeug 7 bis auf Höhe der Spannbacken 4 durchgeführt werden. Die Spannbacken 4 halten das Werkstück 1 gegenüber den von außen und von innen wirkenden Spannkräften.

Für eine Bearbeitung der oberen Seite und der Innenkontur des Werkstücks 1 kann folgende Konfiguration zur Anwendung kommen. Drei Spannbacken 4a sind elektronisch synchronisiert und zentrieren das Werkstück 1 mit einer vorgegebenen Kraft, die durch die Kraftsensoren 6 bestimmbar sind. Dazu sind die Kraftsensoren 6 mit der Steuereinrichtung zusammengeschaltet. Die Spannbacken 4b sind einzeln angetrieben und Spannen das Werkstück 1 von außen ebenfalls mit einer vorgegebenen Kraft. Nachdem die Bearbeitung der Innenkontur und der oberen Seite durchgeführt wurde, werden die Spannbacken 4b synchronisiert Verfahren und zentrieren das Werkstück 1 von innen. Haben die Spannbacken 4b die vorbestimmte Kraft erreicht, werden die Spannbacken 4a auch von innen an das Werkstück 1 angefahren. Das kann nach Wahl synchronisiert oder einzeln erfolgen. Nun kann in der gleichen Spannlage die Außenkontur bearbeitet werden.

Die elektrische Anbindung der Linearantriebe 5 einschließlich der Wegmesssysteme und der Kraftsensoren 6 sowie der Steuereinrichtung erfolgt mit Schleifringen 11.

In einer Ausführungsform besitzt das Spannfutter zum Spannen des Werkstücks 1 zusätzlich Elektro-Permanent-Magnete.

Dazu sind im Grundkörper 2 n-Permanent-Magnetkerne 8 und entsprechend n-Spulen angeordnet, welche die Magnetkerne 8 durch Induktion magnetisieren. Über Polsegmente 9 und Polschuhe 10 werden die Magnetfeldlinien in das Werkstück 1 konzentriert und durch die Flusslinien von dem Nord- zum Südpol gespannt.

In einer weiteren Ausführungsform werden mittels der Kraftsensoren 6 die auftretenden Fliehkräfte ermittelt, welche durch die anstehende Drehzahl und der Masse der Spann- 4 und Grundbacken 3 hervorgebracht werden. Die Kompensation erfolgt durch Addition beim Spannen und/oder Zentrieren von außen zu den vorgewählten Spann- und/oder Zentrierkräften und in umgekehrter Weise durch Subtraktion beim Spannen und/oder Zentrieren von innen zu den vorgewählten Spann- und/oder Zentrierkräften.

In einer weiteren Ausführungsform ist das Spannfutter auch ohne Elektro- oder Elektro-Permanent-Magnetsystem zu verwenden.

## Patentansprüche

1. Spannfutter zum Spannen und Zentrieren ringförmig ausgebildeter und verformungsempfindlicher Werkstücke mit einem Grundkörper und mehreren geführt radial verfahrbaren und jeweils an einen Linearantrieb gekoppelten Spannbacken, **dadurch gekennzeichnet, dass** Spannbacken (4) zum Außen- und Innenspannen des Werkstücks (1) angeordnet und mit Linearantrieben (5) gekoppelt sind, so dass das Werkstück (1) von jeder Spannbacke außen oder innen oder von verschiedenen Spannbacken sowohl außen als auch innen spann- oder zentrierbar ist, dass Wegmesssysteme für die Positionsbestimmung der Spannbacken (4) und Kraftsensoren (6) wenigstens für die Spannkräfte Bestandteile der Linearantriebe (5) der Spannbacken (4) sind und dass die Linearantriebe (5), die Wegmesssysteme und die Kraftsensoren (6) mit einer Steuereinrichtung verbunden sind, wobei die Steuereinrichtung ein Bestandteil des Spannfutters ist.

2. Spannfutter nach Patentanspruch 1, **dadurch gekennzeichnet, dass** im Grundkörper (2) Elektromagnete jeweils bestehend aus einem Permanent-Magnetkern (8) mit einer Spule, Polsegmenten (9) und Polschuhen (10) zum Spannen des Werkstücks (1) angeordnet sind.

3. Spannfutter nach Patentanspruch 2, **dadurch gekennzeichnet, dass** im Grundkörper (2) ein Elektro-Permanent-Magnetsystem oder Elektro-Magnetsystem angeordnet ist.

4. Spannfutter nach Patentanspruch 1, **dadurch gekennzeichnet, dass** die Spannbacke (4) auf einer Grundbacke (3) befestigt ist und dass die Grundbacke (3) an den Linearantrieb (5) gekoppelt ist.

5. Spannfutter nach Patentanspruch 1, **dadurch gekennzeichnet, dass** die Spannbacke (4) eine u-Form besitzt und dass der Abstand der Schenkel der u-förmigen Spannbacke (4) größer als die Ringbreite des Werkstücks (1) ist, so dass die Innenflächen der Schenkel der u-förmigen Spannbacke (4) das Werkstück (1) innen oder außen spannen.

6. Spannfutter nach Patentanspruch 1, **dadurch gekennzeichnet, dass** das Spannfutter Schleifringe (11) zur elektrischen Verbindung wenigstens der Linearantriebe (5) und der Steuereinrichtung mit einer elektrischen Energiequelle besitzt.

7. Spannfutter nach Patentanspruch 1, **dadurch gekennzeichnet, dass** Kraftsensoren (6) über die Steuereinrichtung mit Linearantrieben (5) so verbunden sind, dass Spannbacken (4) synchron verfahren werden und das Werkstück (1) mit vorgegebener Kraft zentrieren und/oder spannen.

8. Spannfutter nach Patentanspruch 3, **dadurch gekennzeichnet, dass** die Kraftsensoren (6), die Linearantriebe (5) und die Elektromagnete oder Elektro-Permanent-Magnete mit der Steuereinrichtung so verbunden sind, dass die Spannbacken (4) synchron oder einzeln verfahren werden, das Werkstück (1) mit vorgegebener Kraft zentrieren und/oder das Werkstück (1) mit den Elektromagneten oder Elektro-Permanent-Magnete gespannt wird.

9. Spannfutter nach Patentanspruch 7, **dadurch gekennzeichnet, dass** Kraftsensoren (6) über die Steuereinrichtung mit Linearantrieben (5) so verbunden sind, dass Spannbacken (4) zum Spannen von außen oder innen synchron verfahren werden und das Werkstück (1) mit vorgegebener Kraft zentrieren und die Innen- oder Außenkontur und die vom Spannfutter abgewandte Kontur des Werkstücks (1) bearbeitbar sind und dass Spannbacken (4) zum nachfolgenden Spannen von innen oder außen synchron verfahren werden und das Werkstück (1) mit vorgegebener Kraft zentrieren und die Außen- oder Innenkontur bearbeitbar ist.

10. Spannfutter nach Patentanspruch 1, **dadurch gekennzeichnet, dass** die Kraftsensoren (6) über die Steuereinrichtung mit den Linearantrieben (5) so verbunden sind, dass die auftretenden Fliehkräfte, welche durch die Drehzahl und die Masse der Spannbacken (4) sowie des Werkstücks (1) entstehen, über die Kraftsensoren (6) ermittelt werden und durch beim Spannen und/oder Zentrieren von außen zu den vorgewählten Spann- und/oder Zentrierkräften addiert und in umgekehrter Weise beim Spannen und/oder Zentrieren von innen von den vorgewählten Spann- und/oder Zentrierkräften subtrahiert und damit die Fliehkräfte kompensiert werden.

11. Spannfutter nach Patentanspruch 1, **dadurch gekennzeichnet, dass** die Kraftsensoren (6) über die Steuereinrichtung mit den Linearantrieben (5) so verbunden sind, dass Spannbacken (4) einzeln oder in wenigstens einer Gruppe von Spannbacken (4) entsprechend vorgegebener sich erhöhender Kräfte verfahren werden und das Werkstück (1) mit vorgegebener Kraft zentrieren und/oder spannen.

## Claims

1. Collet chuck for clamping and centering ring-shaped, deformation-susceptible workpieces comprising a basic structure and several clamping jaws radially movable in a guided manner, each of them coupled to a linear drive, **characterized by that** clamping jaws (4) are disposed for external and internal clamping of the workpiece (1) and coupled to linear drives (5) so that the workpiece (1) by each clamping jaw is externally or internally clampable and centerable, or by different clamping jaws externally as well as internally clampable and centerable, that displacement measuring systems for determining the positions of the clamping jaws (4) and force sensors (6) at least for the clamping forces are component parts of the linear drives (5) of the clamping jaws (4), and that the linear drives (5), the displacement measuring systems and the force sensors (6) are connected to a control device, the control device being a component part of the collet chuck.

2. Collet chuck to claim 1 **characterized by that** in the basic structure (2) electromagnets are disposed, each electromagnet comprising a permanent magnet core (8) including a coil, pole segments (9) and pole shoes (10) for clamping the workpiece (1).

3. Collet chuck to claim 2 **characterized by that** in the basic structure (2) an electro-permanent magnet system or electro magnet system is disposed.

4. Collet chuck to claim 1 **characterized by that** the clamping jaw (4) is fixed to a basic jaw (3), the basic jaw (3) coupled to the linear drive (5).

5. Collet chuck to claim 1 **characterized by that** the clamping jaw (4) has a U-shape with the distance of the legs of the U-shaped clamping jaw (4) longer than the ring width of the workpiece (1) so that the inner surfaces of the legs of the U-shaped clamping jaw (4) internally or externally clamp the workpiece (1).

6. Collet chuck to claim 1 **characterized by that** the collet chuck is provided with slip rings (11) for the electrical connection of at least the linear drives (5) and the control device to an electric power source.

7. Collet chuck to claim 1 **characterized by that** force sensors (6) over the control device are connected to linear drives (5) such that clamping jaws (4) are synchronously moved, centering and/or clamping the workpiece (1) at a predetermined force.

8. Collet chuck to claim 3 **characterized by that** the force sensors (6), the linear drives (5) and the electromagnets or electro-permanent magnets are connected to the control device such that the clamping jaws (4) are synchronously or individually moved, centering the workpiece (1) at a predetermined force and/or the workpiece (1) is clamped by the electromagnets or electro-permanent magnets.

9. Collet chuck to claim 7 **characterized by that** force sensors (6) over the control device are connected to linear drives (5) such that clamping jaws (4) for clamping from outside or inside are synchronously moved, centering the workpiece (1) at a predetermined force, and the inner or outer contour and the contour of the workpiece (1) away from the clamping jaw are machinable, and that clamping jaws (4) for subsequent clamping from inside or outside are synchronously moved, centering the workpiece (1) at a predetermined force, the outer or inner contour being machinable.

10. Collet chuck to claim 1 **characterized by that** the force sensors (6) over the control device are connected to the linear drives (5) such that the centrifugal forces caused due to the revolutions and the mass of the clamping jaws (4) and the workpiece (1) as well are determined using the force sensors (6) and, when clamping and/or centering is from outside, are added to the preselected clamping and/or centering forces and conversely, when clamping and/or centering is from inside, are subtracted from the preselected clamping and/or centering forces, so that the centrifugal forces are compensated for.

11. Collet chuck to claim 1 **characterized by that** the force sensors (6) over the control device are connected to the linear drives (5) such clamping jaws (4) individually or in, at least, one group of clamping jaws (4) are moved according to predetermined increasing forces, centering and/or clamping the workpiece (1) at a predetermined force.

## Revendications

1. Mandrin de serrage pour le serrage et le centrage de pièces usinées réalisées de forme annulaire et sensibles à la déformation, avec un corps de base et avec plusieurs mors de serrage guidés en translation radiale et couplés chacun à un entraînement linéaire, **caractérisé en ce que** les mors de serrage (4) sont disposés pour le serrage extérieur et pour le serrage intérieur de la pièce usinée (1) et sont couplés à des entraînements linéaires (5), de sorte que la pièce usinée (1) peut être serrée ou centrée extérieurement ou intérieurement par chaque mors de serrage ou à la fois extérieurement et intérieurement par différents mors de serrage, **en ce que** des systèmes de mesure de déplacement pour déterminer la position des mors de serrage (4) et des capteurs de force (6) au moins pour les forces de serrage font partie des entraînements linéaires (5) des mors de serrage (4), et **en ce que** les entraînements linéaires (5), les systèmes de mesure de déplacement et les capteurs de force (6) sont reliés à un dispositif de commande, sachant que le dispositif de commande fait partie du mandrin de serrage.

2. Mandrin de serrage selon la revendication 1, **caractérisé en ce que** des électroaimants, constitués chacun d'un noyau d'aimant permanent (8) avec une bobine, des segments polaires (9) et des pièces polaires (10), sont disposés dans le corps de base (2) pour le serrage de la pièce usinée (1).

3. Mandrin de serrage selon la revendication 2, **caractérisé en ce qu'**un système magnétique électro-permanent ou un système électromagnétique est disposé dans le corps de base (2).

4. Mandrin de serrage selon la revendication 1, **caractérisé en ce que** le mors de serrage (4) est fixé sur un mors de base (3) et **en ce que** le mors de base (3) est couplé à l'entraînement linéaire (5).

5. Mandrin de serrage selon la revendication 1, **caractérisé en ce que** le mors de serrage (4) possède une forme de U et **en ce que** la distance entre les branches du mors de serrage (4) en forme de U est supérieure à la largeur d'anneau de la pièce usinée (1), de sorte que les faces intérieures des branches du mors de serrage (4) en forme de U serrent intérieurement ou extérieurement la pièce usinée (1).

6. Mandrin de serrage selon la revendication 1, **caractérisé en ce que** le mandrin de serrage possède des bagues collectrices (11) afin de relier électriquement à une source d'énergie électrique au moins les entraînements linéaires (5) et le dispositif de commande.

7. Mandrin de serrage selon la revendication 1, **caractérisé en ce que** des capteurs de force (6) sont reliés par l'intermédiaire du dispositif de commande à des entraînements linéaires (5) de telle sorte que les mors de serrage (4) sont déplacés de manière synchrone et centrent et/ou serrent la pièce usinée (1) avec une force prédéfinie.

8. Mandrin de serrage selon la revendication 3, **caractérisé en ce que** les capteurs de force (6), les entraînements linéaires (5) et les électroaimants ou aimants électro-permanents sont reliés au dispositif de commande de telle sorte que les mors de serrage (4) sont déplacés de manière synchrone ou individuellement et centrent la pièce usinée (1) avec une force prédéfinie, et/ou que la pièce usinée (1) est serrée par les électroaimants ou les aimants électro-permanents.

9. Mandrin de serrage selon la revendication 7, **caractérisé en ce que** des capteurs de force (6) sont reliés par l'intermédiaire du dispositif de commande à des entraînements linéaires (5) de telle sorte que les mors de serrage (4) sont déplacés de l'extérieur ou de l'intérieur de manière synchrone et centrent la pièce usinée (1) avec une force prédéfinie, et le contour intérieur ou extérieur et le contour de la pièce usinée (1) éloigné du mandrin de serrage peuvent être usinés, et que les mors de serrage (4) sont déplacés de l'intérieur ou de l'extérieur de manière synchrone pour le serrage suivant et centrent la pièce usinée (1) avec une force prédéfinie, et le contour extérieur ou intérieur peut être usiné.

10. Mandrin de serrage selon la revendication 1, **caractérisé en ce que** les capteurs de force (6) sont reliés par l'intermédiaire du dispositif de commande aux entraînements linéaires (5) de telle sorte que les forces centrifuges qui apparaissent du fait de la vitesse de rotation et de la masse des mors de serrage (4) ainsi que de la pièce usinée (1) sont déterminées au moyen des capteurs de force (6) et, lors du serrage et/ou du centrage de l'extérieur, sont ajoutées aux forces de serrage et/ou de centrage présélectionnées, et à l'inverse, lors du serrage et/ou du centrage de l'intérieur, sont soustraites des forces de serrage et/ou de centrage présélectionnées, de sorte que les forces centrifuges sont compensées.

11. Mandrin de serrage selon la revendication 1, **caractérisé en ce que** les capteurs de force (6) sont reliés par l'intermédiaire du dispositif de commande aux entraînements linéaires (5) de telle sorte que des mors de serrage (4) sont, individuellement ou dans au moins un groupe de mors de serrage (4), déplacés conformément à des forces prédéfinies qui augmentent, et centrent et/ou serrent la pièce usinée (1) avec une force prédéfinie.
